# EUROPEAN PATENT APPLICATION

(11) **EP 3 664 400 A1**
(43) Date of publication of application: **10.06.2020**
(21) Application number: 18840544.3
(22) Date of filing: 01.08.2018
(51) Int. Cl.: H04L 29/06, H04L 29/08

(54) **RICH COMMUNICATION SUITE (RCS)-BASED CONTACT MANAGEMENT METHOD AND APPARATUS, AND STORAGE MEDIUM**

(30) Priority: 01.08.2017 CN 201710645848
(71) Applicant: ZTE Corporation, Shenzhen, Guangdong 518057 (CN)
(72) Inventor: LIU, Yifu, Shenzhen Guangdong 518057 (CN); LIU, Shijiao, Shenzhen Guangdong 518057 (CN)
(74) Representative: Hervouet-Malbec, Sylvie
(86) International application number: PCT/CN2018/098070
(87) International publication number: WO 2019/024874

(57) **Abstract**

The present disclosure provides a rich communication suite (RCS)-based contact management method, a mobile terminal, a network address book server and a computer-readable storage medium. According to the present disclosure, a user only needs to send a request for acquiring contact information to the network address book server, and then the contact information sent by the network address book server is added to the address book, so that the contact can be added.

## Description

### TECHNICAL FIELD

The present disclosure relates to the field of communications technologies, and in particular, to a rich communication suite (RCS)-based contact management method, a device, and a computer storage medium.

### BACKGROUND

As various mobile terminals become more and more popular, users have higher and higher requirements on various functions of the mobile terminals. However, the conventional mobile terminal requires a user to manually input contact information. The manual input operation is complicated and also causes an unnecessary waste of time, thereby adversely affecting the user experience.

### SUMMARY

The present disclosure provides a rich communication suite (RCS)-based contact management method, which includes steps of: sending a request for acquiring contact information to a network address book server; receiving contact information sent by the network address book server; and adding the contact information to an address book, wherein the request for acquiring contact information includes user information of a mobile terminal and a condition on contact information to be acquired.

The present disclosure further provides a mobile terminal, which includes a processor, a memory, and a communication bus, wherein the communication bus is configured to implement connection and communication between the processor and the memory, and the processor is configured to execute computer instructions stored in the memory to implement the above RCS-based contact management method.

The present disclosure further provides a computer-readable storage medium having stored thereon at least one program, which is executable by at least one processor to implement the above RCS-based contact management method.

The present disclosure further provides another RCS-based contact management method, which includes steps of: receiving a request for acquiring contact information sent by a mobile terminal; determining, according to the request for acquiring contact information, associated contact information; and sending the contact information to the mobile terminal, wherein the request for acquiring contact information includes user information of the mobile terminal and a condition on contact information to be acquired.

The present disclosure further provides a network address book server, which includes a processor, a memory, and a communication bus, wherein the communication bus is configured to implement connection and communication between the processor and the memory, and the processor is configured to execute computer instructions stored in the memory to implement the above other RCS-based contact management method.

The present disclosure further provides a computer-readable storage medium having stored thereon at least one program, which is executable by at least one processor to implement the above other RCS-based contact management method.

### BRIEF DESCRIPTION OF THE DRAWINGS

Fig. 1 is a flowchart illustrating a RCS-based contact management method, which is applied to a mobile terminal, according to an embodiment of the present disclosure.
Fig. 2 is a flowchart illustrating another RCS-based contact management method, which is applied to a mobile terminal, according to an embodiment of the present disclosure.
Fig. 3 is a flowchart illustrating still another RCS-based contact management method, which is applied to a mobile terminal, according to an embodiment of the present disclosure.
Fig. 4 is a schematic diagram illustrating a structure of a mobile terminal according to an embodiment of the present disclosure.
Fig. 5 is a flowchart illustrating a RCS-based contact management method, which is applied to a network address book server, according to an embodiment of the present disclosure.
Fig. 6 is a flowchart illustrating another RCS-based contact management method, which is applied to a network address book server, according to an embodiment of the present disclosure.
Fig. 7 is a schematic diagram illustrating a structure of a network address book server according to an embodiment of the present disclosure.

### DETAILED DESCRIPTION

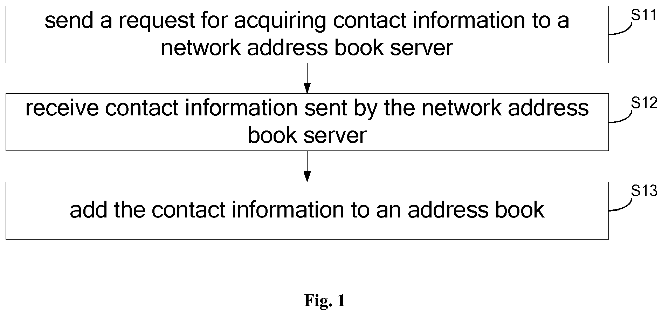

In some cases, the operation of manually entering contact information can be complicated and time consuming. In this regard, embodiments of the present disclosure provide a rich communication suite (RCS)-based contact management method, which may be applied to a mobile terminal side. Referring to Fig. 1, the method includes the following steps S11 to S13.

At step S11, a request for acquiring contact information is sent to a network address book server.

At step S12, contact information sent by the network address book server is received.

At step S13, the contact information is added to an address book.

In an embodiment, the request for acquiring contact information includes: user information of the mobile terminal and a condition on contact information to be acquired.

That is to say, in the embodiment of the present disclosure, a request for acquiring contact information may be sent to a network address book server by a mobile terminal, the network address book server acquires associated contact information according to the request, and the mobile terminal adds the contact information sent by the network address book server to an address book. That is, according to the embodiment of the present disclosure, a user only needs to send a request for acquiring contact information to the network address book server, and then adds the contact information sent by the network address book server to the address book, so as to add a contact. Therefore, the complicated operation of manual input can be avoided, and the time of the user is saved, so that the user experience is greatly improved.

Specifically, the embodiment of the present disclosure may improve the contact management efficiency of an RCS terminal by providing a reasonable contact recommendation method using the contact data stored in the network, so as to improve the user viscosity.

It should be noted that the mobile terminal in the embodiments of the present disclosure may be any terminal that needs to maintain contact information, such as a mobile phone. In addition, the mobile terminals described in the embodiments of the present disclosure are all RCS terminals, that is, mobile terminals with RCS capability.

In an embodiment of the present disclosure, the mobile terminal is responsible for: managing contacts of the user and synchronizing the contacts to the network address book server, while the network address book server is responsible for: storing contact data uploaded by the mobile terminal, contact data of an enterprise and the like; processing a contact management request from a network element such as a mobile terminal; and processing information such as ON/OFF configuration of a mobile terminal. The mobile terminal according to the embodiment of the present disclosure may have an option of "receiving contact recommendation from network address book server or not".

The method described in the present disclosure may be used within an enterprise or within a group of friends, as well as a group of classmates or a group of partners, etc., given that contact information involves personal privacy. That is, from a security perspective, the method described in the present disclosure may be applied to a group that can share contact information.

For example, when a person newly enters a department of an enterprise and needs to acquire contact information of all persons in the department, the mobile terminal may be triggered to send a request for acquiring contact information to the network address book server, then receive contact information sent by the network address book server, and add the contact information to an address book. Correspondingly, other people in the department can also store contact information of the new person in their address book by sending a request for acquiring contact information to the network address book server and then receiving the contact information sent by the network address book server. Therefore, the complicated operation of manual input can be avoided, and the time is saved, so that the user experience is greatly improved.

The contact information according to an embodiment of the present disclosure may include: the name of the contact, the telephone number of the contact, the email address of the contact, the address of the contact, and so on. Of course, those skilled in the art can also obtain other sharable contact information through the network address book server according to the method disclosed in the present disclosure.

Generally, the embodiment of the present disclosure provides a method for adding a contact based on contacts of an enterprise address book (which may also be an address book of any other preset group or team) of an RCS network address book. In specific implementation, the enterprise address book can be uploaded to an RCS network address book server; then, the network address book server obtains associated contact information according to the request for acquiring contact information sent by a mobile terminal, and sends the associated contact information to the mobile terminal; and finally, the addition of the contact is completed by the mobile terminal. Therefore, the complicated operation of manual input can be avoided, and the time of the user is saved, so that the user experience is greatly improved.

In an embodiment of the present disclosure, the request for acquiring contact information may include: user information of the mobile terminal and a condition on contact information to be acquired.

In an embodiment of the present disclosure, the condition on contact information to be acquired includes at least one of the followings: uploading time of the contact information, range of the contact to be acquired and level of the contact to be acquired.

Specifically, the network address book server may obtain the associated contact information according to the user information of the mobile terminal, the uploading time of the contact information, the range of the contact to be acquired, and the level of the contact to be acquired, and send the associated contact information to the mobile terminal. Subsequently, the addition of the contact can be completed by the mobile terminal.

In a specific embodiment, the uploading time of the contact information may be the time of initially uploading the contact information, for example, the time at which a new employee A initially uploads the contact information.

In an embodiment of the present disclosure, the range of the contact to be acquired may be a department, a number, and the like of the contact to be acquired. For example, the range of the contact to be acquired may be set to the staff of the software group, and so on.

In an embodiment of the present disclosure, when uploading contact information, the level of the contact may be set, for example, level identifiers such as a first level contact, a second level contact and the like may be set, and the contacts of different levels may have different permissions. For example, the first level contact may be a leader, and the leader may have a permission to acquire contact information of people in all departments which are under the management of the leader, and the second level contact may be a general employee, and the general employee may have a permission to acquire contact information of people in only the employee's own department.

In an embodiment of the present disclosure, the level of the contact to be acquired may be set in the condition on contact information to be acquired, for example, the level of the contact to be acquired may be set as the first level contact.

The method of the present disclosure will be explained and illustrated in detail below with reference to a specific example. The flow of the example may include the following seven steps.

At step 1, a user A wants to add information on a contact (e.g., person B).

At step 2, a terminal of the user A sends a contact synchronization request to a network address book server.

At step 3, the network address book server queries the ON/OFF configuration of the terminal to determine whether to recommend a contact to the terminal of the user A, and if not, the flow ends.

At step 4, the network address book server queries an enterprise address book database to determine whether the user A and the person B are in the same department of the same enterprise, and if so, the flow continues.

At step 5, the network address book server pushes a contact recommendation request to the terminal of the user A.

At step 6, after receiving the recommendation request, the terminal of the user A displays a list of the recommended contact information and prompts the user A whether to add the contact information.

At step 7, if the recommended contact information is selected to be added, the terminal of the user A actively acquires the contact information from the network address book server and adds the contact information to the local address book, and if the user A selects not to add the recommended contact information, the flow ends.

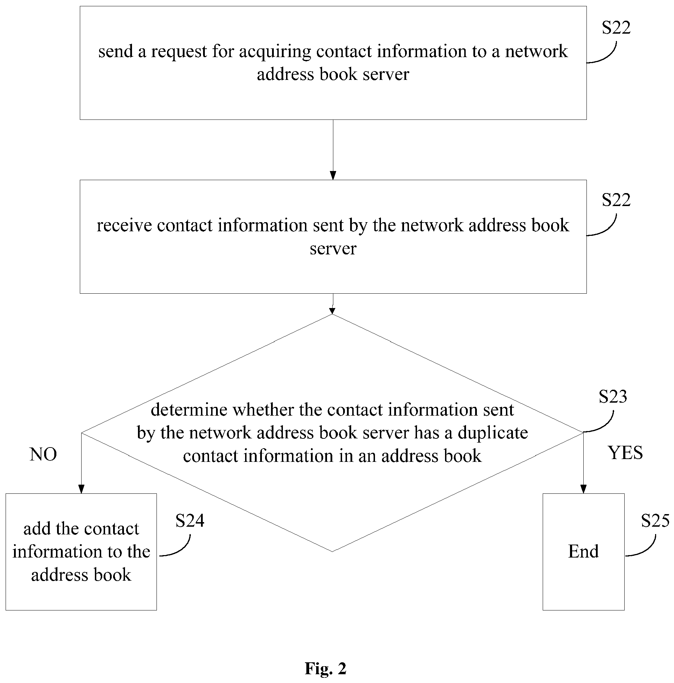

An embodiment of the present disclosure further provides another RCS-based contact management method. As shown in Fig. 2, the flow of the method includes the following steps S21 to S25.

At step S21, a request for acquiring contact information is sent to a network address book server.

At step S22, contact information sent by the network address book server is received.

At step S23, it is determined whether the contact information sent by the network address book server and contact information in an address book are duplicate, if they are duplicate, step S25 is performed, and if they are not duplicate, step S24 is performed.

At step S24, the contact information is added to the address book.

At step S25, the flow of the method ends.

In an embodiment, the request for acquiring contact information includes: user information of a mobile terminal and a condition on contact information to be acquired.

That is to say, in the embodiment of the present disclosure, a request for acquiring contact information may be sent to a network address book server by a mobile terminal, the network address book server acquires associated contact information according to the request, and the mobile terminal adds the contact information sent by the network address book server to an address book. That is, according to the embodiment of the present disclosure, a user only needs to send a request for acquiring contact information to the network address book server, and then adds the contact information sent by the network address book server to the address book, so as to add a contact. Therefore, the complicated operation of manual input can be avoided, and the time of the user is saved, so that the user experience is greatly improved.

In the embodiment of the present disclosure, it may be determined whether the contact information sent by the network address book server and the contact information in the address book are duplicate, and the contact information is added to the address book under the condition that they are not duplicate.

By the method, the problem of duplicated addition of the contact can be effectively avoided, and user experience is further improved.

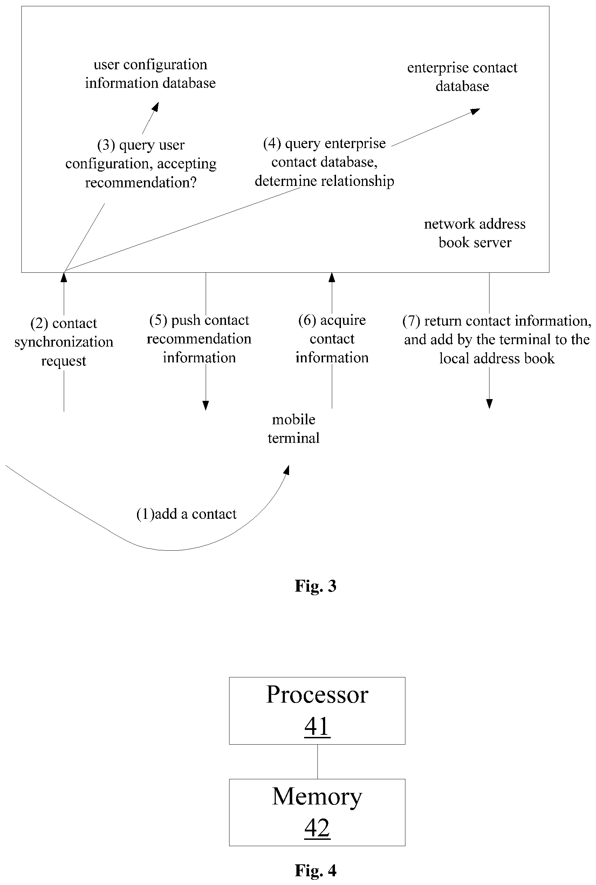

The method of the present disclosure will be explained and illustrated in detail by a specific example with reference to Fig. 3. The flow of the example may include the following seven steps.

At step 1, a user A wants to add information on a contact (e.g., person B).

At step 2, a terminal of the user A sends a contact synchronization request to a network address book server.

Needless to say, to add the contact B, a request for acquiring contact information may be sent to the network address book server.

At step 3, the network address book server queries the ON/OFF configuration of the terminal to determine whether to recommend a contact to the terminal of the user A, and if not, the flow ends.

In order to provide more choices for the user, a switch of accepting contact recommendation from network address book server or not may be provided on the mobile terminal.

At step 4, the network address book server queries an enterprise address book database to determine whether the user A and the person B are in the same department of the same enterprise, and if so, the flow continues.

At step 5, the network address book server pushes a contact recommendation request to the terminal of the user A.

At step 6, after receiving the recommendation request, the terminal of the user A displays a list of the recommended contact information and prompts the user A whether to add the contact information.

At step 7, if the recommended contact information is selected to be added, the terminal of the user A actively acquires the contact information from the network address book server and adds the contact information to the local address book, and if the user A selects not to add the recommended contact information, the flow ends.

An embodiment of the present disclosure further provides a mobile terminal, and as shown in Fig. 4, the mobile terminal includes: a processor 41, a memory 42, and a communication bus.

The communication bus is configured to implement connection and communication between the processor 41 and the memory 42.

The memory 42 is configured to store computer instructions and the processor 41 is configured to execute the computer instructions stored in the memory to perform steps of: sending a request for acquiring contact information to a network address book server; receiving contact information sent by the network address book server; and adding the contact information to an address book, wherein the request for acquiring contact information includes user information of a mobile terminal and a condition on contact information to be acquired.

That is to say, in the embodiment of the present disclosure, a request for acquiring contact information may be sent to a network address book server by a mobile terminal, the network address book server acquires associated contact information according to the request, and the mobile terminal adds the contact information sent by the network address book server to an address book. That is, according to the embodiment of the present disclosure, a user only needs to send a request for acquiring contact information to the network address book server, and then adds the contact information sent by the network address book server to the address book, so as to add a contact. Therefore, the complicated operation of manual input can be avoided, and the time of the user is saved, so that the user experience is greatly improved.

It should be noted that the mobile terminal in the embodiments of the present disclosure may be any terminal that needs to maintain contact information, such as a mobile phone.

The contact information according to an embodiment of the present disclosure may include: the name of the contact, the telephone number of the contact, the email address of the contact, the address of the contact, and so on.

In an embodiment of the present disclosure, the condition on contact information to be acquired includes at least one of the followings: uploading time of the contact information, range of the contact to be acquired and level of the contact to be acquired.

Specifically, the network address book server may obtain the associated contact information according to the user information of the mobile terminal, the uploading time of the contact information, the range of the contact to be acquired, and the level of the contact to be acquired, and send the associated contact information to the mobile terminal. Subsequently, the addition of the contact can be completed by the mobile terminal.

In a specific embodiment, the uploading time of the contact information may be the time of initially uploading the contact information, for example, the time at which a new employee A initially uploads the contact information.

In an embodiment of the present disclosure, the range of the contact to be acquired may be a department, a number, and the like of the contact to be acquired. For example, the range of the contact to be acquired may be set to the staff of the software group, and so on.

In an embodiment of the present disclosure, when uploading contact information, the level of the contact may be set, for example, level identifiers such as a first level contact, a second level contact and the like may be set, and the contacts of different levels may have different permissions. For example, the first level contact may be a leader, and the leader may have a permission to acquire contact information of people in all departments which are under the management of the leader, and the second level contact may be a general employee, and the general employee may have a permission to acquire contact information of people in only the employee's own department.

The processor 41 of the embodiment of the present disclosure is further configured to execute the computer instructions stored in the memory to perform the steps of: determining whether the contact information sent by the network address book server and contact information in the address book are duplicate, if they are not duplicated, the contact information is added to the address book.

By the method, the problem of duplicated addition of the contact can be effectively avoided, and user experience is further improved.

An embodiment of the present disclosure provides a computer-readable storage medium having stored thereon at least one program, which is executable by at least one processor to implement the RCS-based contact management method in any one of the above embodiments, and to realize a corresponding technical effect.

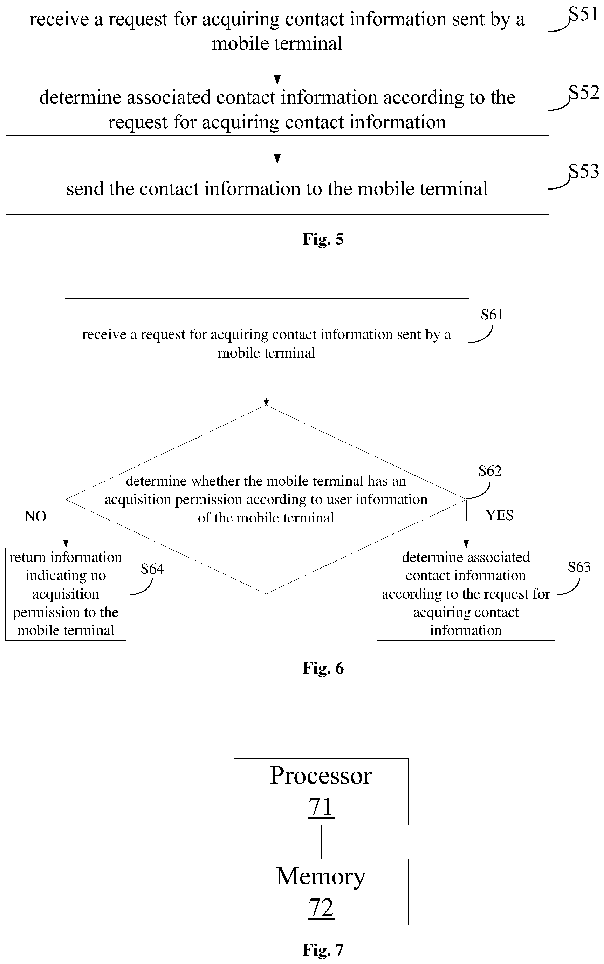

An embodiment of the present disclosure further provides another RCS-based contact management method, which is applied to a network address book server. As shown in Fig. 5, the method includes the following steps S51 to S53.

At step S51, a request for acquiring contact information sent by a mobile terminal is received.

At step S52, associated contact information is determined according to the request for acquiring contact information.

At step S53, the contact information is sent to the mobile terminal.

The request for acquiring contact information includes: user information of the mobile terminal and a condition on contact information to be acquired.

That is to say, in the embodiment of the present disclosure, a network address book server may receive a request for acquiring contact information sent by a mobile terminal, acquire associated contact information according to the request for acquiring contact information, and send the contact information to the mobile terminal. That is, according to the embodiment of the present disclosure, the network address book server acquires the associated contact information according to the request for acquiring contact information sent by the mobile terminal and sends the contact information to the mobile terminal, in order for the mobile terminal to add the contact information to an address book. Therefore, the complicated operation of manual input can be avoided, and the time of the user is saved, so that the user experience is greatly improved.

It should be noted that the mobile terminal in the embodiments of the present disclosure may be any terminal that needs to maintain contact information, such as a mobile phone.

The method described in the present disclosure may be used within an enterprise or within a group of friends, as well as a group of classmates or a group of partners, etc., given that contact information involves personal privacy. That is, from a security perspective, the method described in the present disclosure may be applied to a group that can share contact information.

For example, when a person newly enters a department of an enterprise and needs to acquire contact information of all persons in the department, the mobile terminal may be triggered to send a request for acquiring contact information to the network address book server, then receive contact information sent by the network address book server, and add the contact information to an address book. Correspondingly, other people in the department can also store contact information of the new person in their address book by sending a request for acquiring contact information to the network address book server and then receiving the contact information sent by the network address book server. Therefore, the complicated operation of manual input can be avoided, and the time is saved, so that the user experience is greatly improved.

The contact information according to an embodiment of the present disclosure may include: the name of the contact, the telephone number of the contact, the email address of the contact, the address of the contact, and so on. Of course, those skilled in the art can also obtain other sharable contact information through the network address book server according to the method disclosed in the present disclosure.

Generally, the embodiment of the present disclosure provides a method for adding a contact based on contacts of an enterprise address book (which may also be an address book of any other preset group or team) of an RCS network address book. In specific implementation, the enterprise address book can be uploaded to an RCS network address book server; then, the network address book server obtains associated contact information according to the request for acquiring contact information sent by a mobile terminal, and sends the associated contact information to the mobile terminal; and finally, the addition of the contact is completed by the mobile terminal. Therefore, the complicated operation of manual input can be avoided, and the time of the user is saved, so that the user experience is greatly improved.

In an embodiment of the present disclosure, the request for acquiring contact information may include: user information of the mobile terminal and a condition on contact information to be acquired.

In an embodiment of the present disclosure, the condition on contact information to be acquired includes at least one of the followings: uploading time of the contact information, range of the contact to be acquired and level of the contact to be acquired.

Specifically, the network address book server may obtain the associated contact information according to the user information of the mobile terminal, the uploading time of the contact information, the range of the contact to be acquired, and the level of the contact to be acquired, and send the associated contact information to the mobile terminal. Subsequently, the addition of the contact can be completed by the mobile terminal.

In a specific embodiment, the uploading time of the contact information may be the time of initially uploading the contact information, for example, the time at which a new employee A initially uploads the contact information.

In an embodiment of the present disclosure, the range of the contact to be acquired may be a department, a number, and the like of the contact to be acquired. For example, the range of the contact to be acquired may be set to the staff of the software group, and so on.

In an embodiment of the present disclosure, when uploading contact information, the level of the contact may be set, for example, level identifiers such as a first level contact, a second level contact and the like may be set, and the contacts of different levels may have different permissions. For example, the first level contact may be a leader, and the leader may have a permission to acquire contact information of people in all departments which are under the management of the leader, and the second level contact may be a general employee, and the general employee may have a permission to acquire contact information of people in only the employee's own department.

In an embodiment of the present disclosure, the level of the contact to be acquired may be set in the condition on contact information to be acquired, for example, the level of the contact to be acquired may be set as the first level contact.

An embodiment of the present disclosure further provides another RCS-based contact management method. As shown in Fig. 6, the method includes the following steps S61 to S64.

At step S61, a request for acquiring contact information sent by a mobile terminal is received.

At step S62, it is determined whether the mobile terminal has an acquisition permission according to user information of the mobile terminal, if the mobile terminal has the acquisition permission, step S63 is performed, and otherwise, step S64 is performed.

At step S63, associated contact information is determined according to the request for acquiring contact information.

At step S64, information indicating no acquisition permission is returned to the mobile terminal.

In an embodiment, the request for acquiring contact information includes: user information of the mobile terminal and a condition on contact information to be acquired.

Specifically, in the embodiment of the present disclosure, after receiving a request for acquiring contact information sent by a mobile terminal, it is first determined whether the mobile terminal has an acquisition permission; after determining that the mobile terminal has the permission, the associated contact information may be determined according to the request for acquiring contact information and sent to the mobile terminal to be added to the address book.

In the embodiment of the present disclosure, the privacy of the contact can be effectively protected by determining the permission of the terminal, so that the user experience is further improved.

An embodiment of the present disclosure further provides a network address book server, and as shown in Fig. 7, the network address book server includes: a processor 71, a memory 72 and a communication bus.

The communication bus is configured to implement connection and communication between the processor 71 and the memory 72.

The memory 72 is configured to store computer instructions and the processor 71 is configured to execute the computer instructions stored in the memory to perform the steps of: receiving a request for acquiring contact information sent by a mobile terminal; determining, according to the request for acquiring contact information, associated contact information; and sending the contact information to the mobile terminal, wherein the request for acquiring contact information includes user information of the mobile terminal and a condition on contact information to be acquired.

That is to say, in the embodiment of the present disclosure, a network address book server may receive a request for acquiring contact information sent by a mobile terminal, acquire associated contact information according to the request for acquiring contact information, and send the contact information to the mobile terminal. That is, according to the embodiment of the present disclosure, the network address book server acquires the associated contact information according to the request for acquiring contact information sent by the mobile terminal and sends the contact information to the mobile terminal, in order for the mobile terminal to add the contact information to an address book. Therefore, the complicated operation of manual input can be avoided, and the time of the user is saved, so that the user experience is greatly improved.

In a specific embodiment, the processor 71 is further configured to execute the computer instructions stored in the memory to perform the steps of: receiving a request for acquiring contact information uploaded by a mobile terminal; and determining whether the mobile terminal has an acquisition permission according to user information of the mobile terminal. If the mobile terminal has the acquisition permission, the associated contact information is determined according to the request for acquiring contact information, and if the mobile terminal does not have the acquisition permission, information indicating no acquisition permission is returned to the mobile terminal.

Specifically, in the embodiment of the present disclosure, after receiving a request for acquiring contact information uploaded by a mobile terminal, it is first determined whether the mobile terminal has an acquisition permission; after determining that the mobile terminal has the permission, the associated contact information may be determined according to the request for acquiring contact information and sent to the mobile terminal to be added to the address book.

An embodiment of the present disclosure provides a computer-readable storage medium having stored thereon at least one program, which is executable by at least one processor to implement the RCS-based contact management method in any one of the above embodiments, and to realize a corresponding technical effect.

Although the exemplary embodiments of the present disclosure have been described for illustrative purposes, those skilled in the art will appreciate that various modifications, additions and substitutions are possible. Thus, the scope of the present disclosure is not limited to the exemplary embodiments described above.

## Claims

1. A rich communication suite, RCS, -based contact management method, which is applied to a mobile terminal, comprising steps of:
sending a request for acquiring contact information to a network address book server;
receiving contact information sent by the network address book server; and
adding the contact information to an address book,
wherein the request for acquiring contact information comprises user information of the mobile terminal and a condition on contact information to be acquired.

2. The method of claim 1, wherein,
the condition on contact information to be acquired comprises at least one of: an uploading time of contact information, a range of a contact to be acquired and a level of a contact to be acquired.

3. The method of claim 1 or 2, further comprising, after the step of receiving contact information sent by the network address book server and before the step of adding the contact information to an address book, a step of:
determining whether the contact information sent by the network address book server and contact information in the address book are duplicate, wherein if the contact information sent by the network address book server and the contact information in the address book are not duplicate, the contact information is added to the address book.

4. A rich communication suite, RCS, -based contact management method, which is applied to a network address book server, comprising steps of:
receiving a request for acquiring contact information sent by a mobile terminal;
determining, according to the request for acquiring contact information, associated contact information; and
sending the contact information to the mobile terminal,
wherein the request for acquiring contact information includes user information of the mobile terminal and a condition on contact information to be acquired.

5. The method of claim 4, wherein,
the condition on contact information to be acquired comprises at least one of: an uploading time of contact information, a range of a contact to be acquired and a level of a contact to be acquired.

6. The method of claim 4 or 5, further comprising a step of:
determining whether the mobile terminal has an acquisition permission according to the user information of the mobile terminal in the request for acquiring contact information, wherein, if the mobile terminal has the acquisition permission, the associated contact information is determined according to the request for acquiring the contact information, and if the mobile terminal does not have the acquisition permission, information indicating no acquisition permission is returned to the mobile terminal.

7. A mobile terminal, comprising a processor, a memory and a communication bus, wherein
the communication bus is configured to implement connection and communication between the processor and the memory, and
the processor is configured to execute computer instructions stored in the memory to implement the RCS-based contact management method of any one of claims 1 to 3.

8. A computer-readable storage medium having stored thereon at least one program, the at least one program being executable by at least one processor to implement the RCS-based contact management method of any one of claims 1 to 3.

9. A network address book server, comprising a processor, a memory and a communication bus, wherein
the communication bus is configured to implement connection and communication between the processor and the memory, and
the processor is configured to execute computer instructions stored in the memory to implement the RCS-based contact management method of any one of claims 4 to 6.

10. A computer-readable storage medium having stored thereon at least one program, the at least one program being executable by at least one processor to implement the RCS-based contact management method of any one of claims 4 to 6.
